# EUROPEAN PATENT SPECIFICATION

(11) **EP 2 177 131 B1**
(45) Date of publication and mention of the grant of the patent: **28.12.2011**
(21) Application number: 09172788.3
(22) Date of filing: 12.10.2009
(51) Int. Cl.: A47B 96/20, B32B 17/06, B32B 21/04

(54) **Method to make glass-covered panels, such as doors, shutters, windows or suchlike, and glass-covered panel thus obtained**
Verfahren zur Herstellung von glasbeschichteten Platten wie Türen, Läden, Fenster o. ä. und mit diesem Verfahren hergestellte glasbeschichtete Platte
Procédé de fabrication de panneau recouverts de verre, tels que des portes, volets, fenêtres ou similaires, et panneau recouvert de verre ainsi obtenu

(30) Priority: 14.10.2008 IT UD20080215
(43) Date of publication of application: 21.04.2010
(73) Proprietor: Legnoflex SpA, 31046 Oderzo (TV) (IT)
(72) Inventor: Rui, Renato, 31046, Oderzo (TV) (IT)
(74) Representative: Petraz, Gilberto Luigi

(56) References cited:
- DE-B3-102004 017 319
- DE-U1- 29 913 003
- DE-U1-202008 004 859
- GB-A- 399 727

## Description

### FIELD OF THE INVENTION

The present invention concerns a method to make panels such as doors, shutters, windows or suchlike, with at least a covering and enhancement face made of glass, and the panel thus obtained.

In particular, the present invention is used to cover panels made of wood, or wood substitute material, with a glass sheet.

### BACKGROUND OF THE INVENTION

In the furnishing sector, it is known to produce furniture or furniture elements with their visible front surfaces made of glass. The surfaces comprise panels, such as doors, shutters, windows or suchlike, the visible face of which is covered with a glass sheet.

A method to make this type of covered panel is known, which provides to attach a glass sheet, which has previously been chamfered, to a panel, generally a chipboard panel, by using a biadhesive material.

Such a method is known from the german utility model DE 20 2008 004 859 U1.

Normally the biadhesive material is not applied on all the surface of the chipboard panel and the glass sheet, but only on a part of these, for example two parallel strips which are symmetrical with respect to a median axis.

Normally, in the known solutions, the glass used has previously been subjected to a tempering treatment which gives it greater mechanical characteristics of resistance, in the event of accidental falls, and of contrast to bending, in order to prevent the glass panel separating from the chipboard panel.

After the glass sheet has been attached to the chipboard panel, edging elements are normally applied at the edges of the chipboard panel, so as to hide said edges.

One disadvantage of this known method is that the use of tempered glass considerably increases production costs.

Moreover, tempered glass is thick and heavy and gives the covered panel a weight which could, over time, compromise the working of the hinges with which the panel is assembled on the pieces of furniture.

Moreover, in the peripheral contact area between the glass sheet and the edging elements, the chamfering of the edge of the sheet creates an optical effect of discontinuity, which is evident and therefore aesthetically undesirable.

This discontinuity is also the cause of cracks which, apart from being unaesthetic, cause dirt and damp to infiltrate, with the risk of swelling the chipboard panel.

Moreover, the chamfering of the glass requires specialized personnel or high precision machines to carry out a uniform job on the whole edge of the sheet, with minimum angular tolerances, so that in the attachment step, the edge of the sheet corresponds to that of the panel.

One purpose of the present invention is to perfect a method to make glass-covered panels in a quick and economic way.

Another purpose of the present invention is to make a glass-covered panel with better functional and aesthetic characteristics than those of known panels.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with said purpose, a method according to the present invention is used to make a panel of wood or a wood substitute material, such as chipboard, MDF, or other, with at least one face covered with a glass sheet.

According to a characteristic feature of the invention, the method comprises at least a first framing step in which, after having prepared a base panel of the desired shape and size, whole or with compartments, edging elements are associated with the base panel, for example on all its sides or only on some of them.

The method according to the present invention provides an intermediate covering step, in which a glass sheet is applied to at least one face of the base panel.

The present invention also comprises a final finishing step in which material is removed from at least part of one or more edges of the glass sheet.

This method guarantees that there is a crack-free correspondence between the edge of the sheet and the edge of the base panel.

According to a variant, in the finishing step, material is also removed from the edging elements and/or the base panel.

This solution allows to carry out the simultaneous chamfering of the glass sheet and the base panel, in particular its edges, creating an effect of continuity between the sheet and the panel, which is extremely effective from both the aesthetic and the functional point of view.

According to a variant, the covering step provides to apply the glass sheet on one of the two faces of the base panel and to apply a sheet of another material, such as laminated wood, or plastic material in general, on the opposite face.

According to a variant, during the finishing step, material is also removed from said sheet.

According to a further variant, the covering step provides to glue the glass sheet to the base panel by means of an adhesive which is laid over the whole surface of the base panel and/or the glass sheet.

This promotes a better adhesion of the glass sheet to the base panel, compared with the known solution which provides the use of a biadhesive.

The present invention not only guarantees to obtain a better aesthetical and functional coupling compared with the state of the art, but also allows to use non-tempered glass, with a consequent reduction in costs and weight of the covered panel.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partial view of the panel and the edges before the framing step;
- fig. 2 is a partial view of the panel after the calibration step;
- fig. 3 is a partial view of the panel after the covering step;
- fig. 4 is a partial view of the panel after the finishing step;
- fig. 5 is a lateral view of the panel in fig. 4;
- fig. 6 is a section from VI to VI of the panel in fig. 4.

### DETAILED DESCRIPTION OF A PREFERENTIAL FORM OF

### EMBODIMENT

With reference to the attached drawings, a method according to the present invention comprises the following steps:
- a framing step;
- a calibration step;
- a covering step;
- a pressing step;
- a finishing step of the panel.

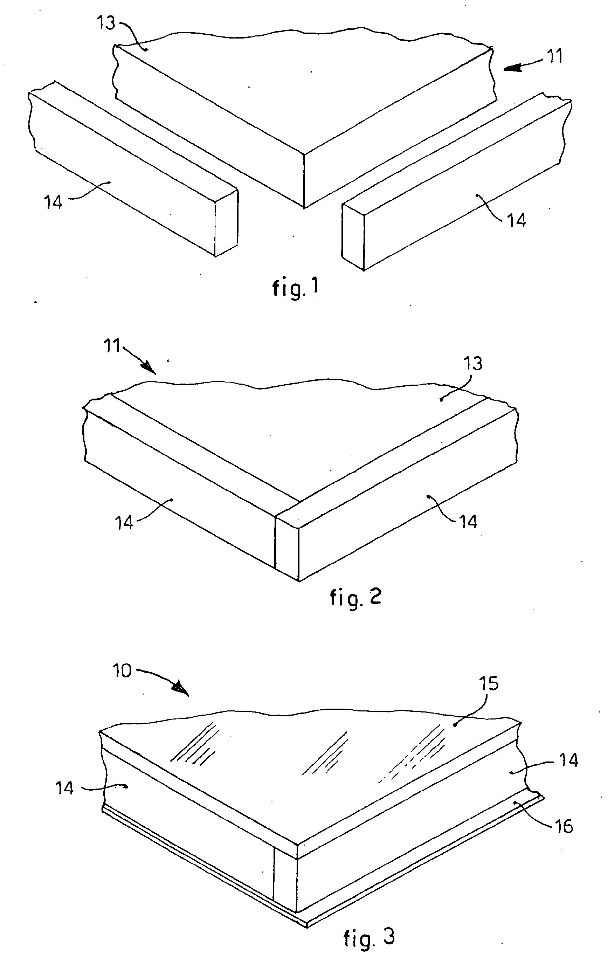

With particular reference to fig. 1, the framing step comprises the application, by gluing, of strips 14 of laminated wood, or plastic material, to a chipboard panel 11, in correspondence with the peripheral edges 21.

In the calibration step, material is removed from the strips 14 in order to reduce the thickness to the thickness of the chipboard panel 11 and thus give continuity to each of the faces of the panel in correspondence with the edges (fig. 2).

In the covering step, a glass sheet 15 with a length and width approximately equal to those of the chipboard panel is applied, by gluing, to one of the two faces 13 of the chipboard panel 11.

The covering step also comprises the application, by gluing, of an internal covering sheet 16 made of laminated or plastic material (fig. 3) on the face 13 of the chipboard panel 11 opposite to that where the glass sheet 15 is applied.

The gluing is carried out by means of an adhesive laid over the whole surface of the two faces of the chipboard panel 11.

Compared with the known solution which uses biadhesive strips, this guarantees a better adhesion of the glass sheet 15 and the internal covering sheet 16 to the chipboard panel 11.

After the covering step there follows a hot pressing step in which the covered panel 10 thus formed is compressed to promote the adhesion of the glass sheet 15 and of the internal covering sheet 16 to the chipboard panel 11.

Advantageously, the glue and the possible plastic material of the strips 14 are made of thermosetting material so as to give the covered panel 10 a greater compactness and resistance to bending.

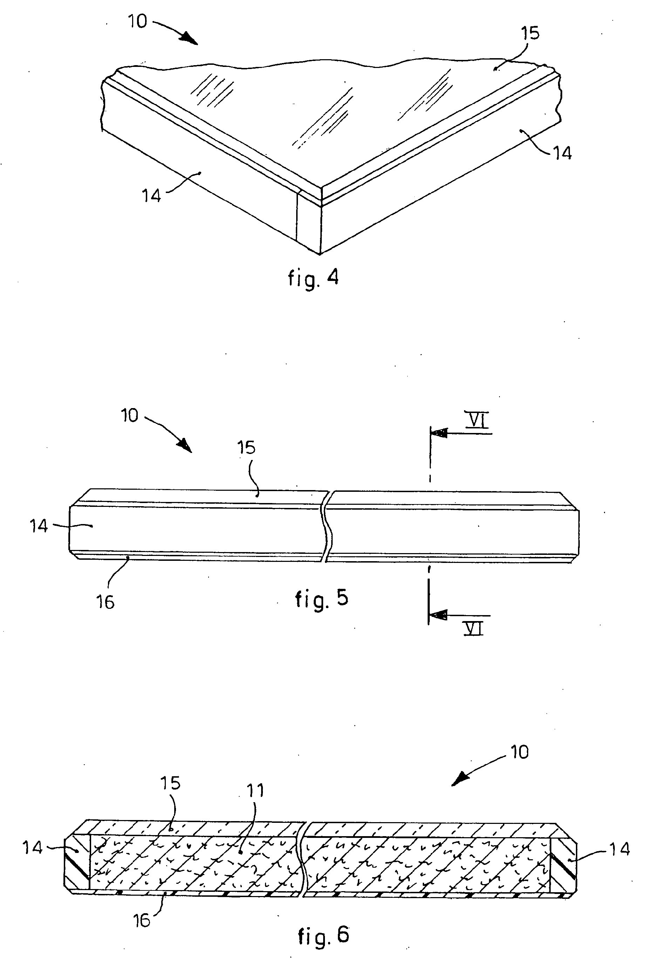

With reference to figs. 4, 5 and 6, the finishing step of the covered panel comprises the elimination of any possible superfluous edgings of the internal covering sheet 16 with respect to the chipboard panel 11, and a chamfering operation.

In the chamfering operation the edges of the glass sheet 15, of the chipboard sheet 11 and the internal covering sheet 16 are chamfered at the same time, thus giving continuity to the chamfer of each edge of the covered panel 10.

It is clear, however, that modifications and/or additions of parts may be made to the method as described heretofore, without departing from the field and scope of the present invention.

It is also clear that, although the present invention has been described with reference to specific examples, a person of skill in the art shall certainly be able to achieve many other equivalent forms of method to make glass-covered panels, having the characteristics as set forth in the claims and hence all coming within the field of protection defined thereby.

## Claims

1. Method to make a glass-covered panel (10), said covered panel (10) comprising a base panel (11) made of wood or wood substitute material, said base panel (11) being able to have compartments, and at least a glass sheet (15), associated with at least one face (13) of said base panel (11), said method comprising at least a preliminary step of preparing said base panel (11) with a desired shape and size, where in it comprises at least a first framing step, in which edging elements (14) are associated with one or more sides of said base panel (11), an intermediate covering step, in which said glass sheet (15) is applied to said face (13), **characterized in that** it comprises final finishing step in which material is removed from at least part of one or more edges of the glass sheet (15).

2. Method as in claim 1, **characterized in that**, in the finishing step, material is also removed from the edging elements (14) and/or the base panel (11).

3. Method as in claim 1 or 2, **characterized in that** the covering step provides to apply on one face (13) of the base panel (11) a sheet (16) of covering material other than glass, and **in that** in the finishing step material is also removed from said sheet (16).

4. Method as in any claim hereinbefore, **characterized in that** said glass sheet (15) is applied to said base panel (11) by gluing, by means of laying an adhesive over the whole surface of the base panel (11) and/or the glass sheet (15).

5. Method as in claim 4, **characterized in that** the adhesive is thermosetting.

6. Method as in any claim hereinbefore, **characterized in that** the edging elements (14) are made of thermosetting material.

7. Panel (10) made of wood or wood substitute material made using the method as in any claim hereinbefore, comprising at least one face (13) covered by means of gluing with a glass sheet (15), and edging elements (14) associated with at least part of its lateral edges (21), in which said glass sheet (15) has at least part of its edges chamfered in a continuous line with the adjacent edges of the panel (11) and/or the edging elements (14).

## Patentansprüche

1. Verfahren zur Herstellung eines glasbeschichteten Paneels (10), wobei das beschichtete Paneel (10) eine Grundplatte (11) aus Holz oder Holzersatzstoff umfasst, wobei die Grundplatte (11) Fächer aufweisen kann, sowie zumindest eine Glasplatte (15), die mit zumindest einer Fläche (13) der Grundplatte (11) verbunden ist, wobei das Verfahren zumindest einen Vorhereitungsschritt umfasst, um die Grundplatte (11) in die gewünschte Form und Größe zu bringen, wobei es zumindest einen ersten Rahmungsschritt umfasst, in dem Kantenelemente (14) mit einer oder mehreren Seiten der Grundplatte (11) verbunden werden, sowie einen zwischengeschalteten Abdeckschritt, in der die Glasplatte (15) auf die Flache (13) aufgebracht wird, **dadurch gekennzeichnet, dass** es eine Abschiussschritt umfasst, in dem von zumindest einem Teil einer oder mehrerer Kanten der Glasplatte (15) Material entfernt wird.

2. Verfahren nach Anspruch 1, **dadurch gekennzeichnet, dass** im Abschlussschritt Material auch von den Kantenelementen (14) und/oder der Grundplate (11) entfernt wird.

3. Verfahren nach Anspruch 1 oder 2, **dadurch gekennzeichnet, dass** der Abdeckschritt vorsieht, dass auf einer Fläche (13) der Grundplatte (11) eine Lage (16) eines Abdeckmaterials aufgebracht wird, das nicht aus Glas besteht, und dass im Abschlussschritt auch von dieser Lage (16) Material entfernt wird.

4. Verfahren nach einem der vorstehenden Ansprüche, **dadurch gekennzeichnet, dass** die Glasplatte (15) durch Kleben auf die Grundplatte aufgebracht wird, indem ein Klebstoff vollflächig auf die Grundplatte (11) und/oder die Glasplatte (15) aufgetragen wird.

5. Verfahren nach Anspruch 4, **dadurch gekennzeichnet, dass** der Klebstoff wärmehärtend ist.

6. Verfahren nach einem der vorstehenden Ansprüche, **dadurch gekennzeichnet, dass** die Kantenelemente (14) aus wärmehärtendem Material bestehen.

7. Paneel (10) aus Holz oder Holzersatzstoff, das unter Anwendung des Verfahrens nach einem der vorstehenden Ansprüche hergestellt wird und zumindest eine Fläche (13) umfasst, die mit einer Glasplatte (15) durch Kleben abgedeckt wird, sowie Kantenelemente (14), die mit zumindest einem Teil ihrer seitlichen Kanten (21) verbunden sind, wobei die Glasplatte (15) an zumindest einem Teil ihrer Kanten entlang einer durchgehenden Linie mit den angrenzenden Kanten der Platte (11) und/oder der Kantenelemente (14) abgefast ist.

## Revendications

1. Procédé de réalisation d'un panneau recouvert de verre (10), ledit panneau recouvert (10) comprenant un panneau de base (11) fait de bois ou d'un matériau substitutif du bois, ledit panneau de base (11) étant capable d'avoir des compartiments, et au moins une feuille de verre (15) associée à au moins une face (13) dudit panneau de base (11), ledit procédé comprenant au moins une étape préliminaire consistant à préparer ledit panneau de base (11) avec une forme et une taille souhaitées, **caractérisé en ce qu'**il comprend au moins une première étape de cadrage dans laquelle les éléments de façonnage (14) sont associés à un ou plusieurs côtés dudit panneau de base (11), une étape de couverture intermédiaire, dans laquelle ladite feuille de verre (15) est appliquée à ladite face (13) et **caractérisé en ce qu'**il comprend une étape de finition définitive, dans laquelle le matériau est enlevé d'au moins une partie d'un ou plusieurs bords de la feuille de verre (15).

2. Procédé selon la revendication 1, **caractérisé en ce que**, lors de l'étape de finition, le matériau est également enlevé des éléments de façonnage (14) et/ou du panneau de base (11).

3. Procédé selon la revendication 1 ou 2, **caractérisé en ce que** l'étape de couverture permet l'application sur une face (13) du panneau de base (11) d'une feuille (16) d'un matériau de couverture différent du verre, et **en ce que** lors de l'étape de finition, ledit matériau est également enlevé de ladite feuille (16).

4. Procédé selon l'une quelconque des revendications ci-dessus, **caractérisé en ce que** ladite feuille de verre (15) est appliquée audit panneau de base (11) par collage, au moyen de la disposition d'un adhésif sur la totalité de la surface du panneau de base (11) et/ou de la feuille de verre (15).

5. Procédé selon la revendication 4, **caractérisé en ce que** l'adhésif est thermodurcissable.

6. Procédé selon l'une quelconque des revendications précédentes, **caractérisé en ce que** les éléments de façonnage (14) sont réalisés en un matériau thermodurcissable.

7. Panneau (10) fait de bois ou d'un matériau substitutif du bois, réalisé en utilisant le procédé selon l'une quelconque des revendications précédentes, comprenant au moins une face (13) recouverte par collage d'une feuille de verre (15), et des éléments de façonnage (14) associés à au moins une partie de ses bords latéraux (21), dans lesquels ladite feuille de verre (15) a au moins une partie de ses bords chanfreinés sur une ligne continue avec les bords adjacents du panneau (11) et/ou les éléments de façonnage (14).
